(19) Europäisches Patentamt
European Patent Office
Office européen des brevets

(11) **EP 2 584 873 B1**

(12) **FASCICULE DE BREVET EUROPEEN**

(45) Date de publication et mention
de la délivrance du brevet:
**11.10.2017 Bulletin 2017/41**

(51) Int Cl.:
***H05B 37/02*** *(2006.01)*

(21) Numéro de dépôt: **12184733.9**

(22) Date de dépôt: **17.09.2012**

(54) **Dispositif de détection sans-fil**

Drahtlose Erkennungsvorrichtung

Wireless detection device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.10.2011 FR 1159517**

(43) Date de publication de la demande:
**24.04.2013 Bulletin 2013/17**

(73) Titulaire: **Schneider Electric Industries SAS
92506 Rueil-Malmaison (FR)**

(72) Inventeurs:
• **Raisigel, Hynek
38360 Sassenage (FR)**
• **Leger, Eric
38530 Chapareillan (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**WO-A1-2010/140094      WO-A2-2010/111256
US-A- 5 455 487      US-A1- 2004 206 609
US-A1- 2008 272 826      US-A1- 2010 270 982**

EP 2 584 873 B1

**Description**

La présente invention se rapporte à un dispositif de détection sans-fil. Ce dispositif de détection est par exemple employé pour détecter l'intensité lumineuse dans un système d'éclairage électronique variable tel que par exemple un système d'éclairage variable à diodes électroluminescentes ou à lampes fluorescentes.

Certains systèmes à éclairage variable à diodes électroluminescentes ou à lampes fluorescentes comportent une source de lumière et un dispositif de commande constitué d'un gradateur destiné à contrôler l'intensité lumineuse fournie par la source de lumière. Le dispositif de commande alimente la source de lumière par une modulation de largeur d'impulsions réglée sur une fréquence de modulation.

Le retour d'information vers le dispositif de commande sur le niveau réel de l'intensité lumineuse est réalisé à l'aide d'un dispositif de détection de luminosité sans-fil, placé dans la zone éclairée.

De manière générale, les dispositifs de détection sans-fil qui sont alimentés par une source d'énergie locale, telle qu'une pile ou un générateur d'énergie autonome (photovoltaïque, thermoélectrique, piézoélectrique...), ne peuvent pas, pour limiter leur consommation d'énergie, mesurer et transmettre des valeurs mesurées continuellement. En effet, pour diminuer leur consommation d'énergie, ils échantillonnent et transmettent périodiquement les valeurs mesurées. C'est donc le dispositif de détection qui décide des instants de transmission des valeurs mesurées. Cependant, ce mode de fonctionnement n'est pas adapté pour le contrôle d'éclairage qui nécessite des mesures continues lorsque le niveau de luminosité est en cours de réglage. Par conséquent, il faut prévoir que le dispositif de commande puisse réveiller le dispositif de détection de luminosité quand cela est nécessaire.

Un capteur de luminosité est connu du document US2004/206609.

Pour réveiller un dispositif de détection de manière asynchrone, il est par exemple connu du document référencé US2008272826 de commander une modification de la fréquence fondamentale du signal capté par le dispositif de détection. Le dispositif de détection détecte le changement de fréquence du signal qu'il reçoit et se réveille pour mesurer et transmettre des valeurs vers le dispositif de commande. En effet, dans le domaine de l'éclairage par diodes électroluminescentes, la seule modification de la fréquence fondamentale du signal lumineux émis n'occasionne pas un changement au niveau de l'éclairage. Cette méthode de réveil du dispositif de détection est donc parfaitement adaptée au domaine de l'éclairage, car transparente pour les utilisateurs.

Cependant, ce document implique d'alimenter des composants pour détecter le changement de fréquence. Or lorsque le dispositif de détection emploie un générateur d'énergie autonome, il doit pouvoir être réveillé de manière asynchrone sans consommer trop d'énergie.

Le but de l'invention est donc de proposer un dispositif de détection sans-fil pouvant être réveillé de manière asynchrone tout en consommant peu d'énergie.

Ce but est atteint par un dispositif de détection destiné à détecter l'intensité d'un signal émis par une source, ladite source étant alimentée par modulation de largeur d'impulsions à une première fréquence, ledit dispositif comportant :

- un générateur d'énergie autonome fournissant un courant de charge,
- des moyens de stockage de l'énergie électrique alimentés par le courant de charge fourni par le générateur d'énergie autonome,
- un capteur destiné à générer des valeurs de mesure,
- un circuit de réveil du dispositif de détection, ledit circuit de réveil comportant des moyens de déclenchement d'un réveil du dispositif de détection lorsque le signal est modulé à une deuxième fréquence, différente de la première fréquence,
- le circuit de réveil étant connecté au générateur d'énergie autonome et ses moyens de déclenchement recevant en entrée une tension fonction du courant de charge généré par le générateur d'énergie autonome.

Selon l'invention, le dispositif comporte également des moyens de détection du signal modulé à la deuxième fréquence, lesdits moyens de détection comportant un circuit résonant.

De plus, il faut s'assurer que le dispositif de détection ne se réveille pas lorsque cela n'est pas nécessaire. Ceci est particulièrement vrai lorsque le dispositif est sans-fil et alimenté par un générateur d'énergie autonome. Dans ce cas, sa consommation d'énergie doit être la plus faible possible et tout faux réveil du dispositif est une consommation d'énergie inutile.

Pour cela, le dispositif comporte un circuit d'élimination des faux réveils, lesdits faux réveils étant dus à une seule variation de l'intensité du signal et/ou à une modification du rapport cyclique de la modulation de largeur d'impulsions.

Selon une particularité, le circuit d'élimination des faux réveils du dispositif de détection comporte un circuit redresseur destiné à détecter une amplitude maximum du courant de charge.

Selon l'invention, les moyens de déclenchement comportent un comparateur à deux entrées sur chacune desquelles est appliqué un potentiel électrique.

Selon l'invention, la première entrée du comparateur est connectée au circuit redresseur pour recevoir une tension égale à la somme de la tension mesurée aux bornes du circuit résonant et de la tension mesurée aux bornes du circuit redresseur, et la deuxième entrée du comparateur est connectée à une tension de référence représentative de la tension aux bornes des moyens de stockage d'énergie.

Selon l'invention, le générateur d'énergie autonome comporte un module photovoltaïque et le capteur est par exemple un capteur de luminosité.

L'invention concerne également un système de communication comportant :

- un coordinateur doté d'une source d'un signal modulé à une première fréquence par modulation de largeur d'impulsions,
- des dispositifs de détection connectés au coordinateur à travers un réseau de communication,
- chaque dispositif de détection étant conforme à celui défini ci-dessus, ladite source comportant des moyens d'émission du signal modulé à une deuxième fréquence en vue de réveiller les dispositifs et de les synchroniser.

D'autres caractéristiques et avantages vont apparaître dans la description détaillée qui suit en se référant à un mode de réalisation donné à titre d'exemple et représenté par les dessins annexés dans lesquels :

- La figure 1 représente un système d'éclairage variable comportant un dispositif de détection sans-fil conforme à l'invention.

- La figure 2 représente de manière détaillée un dispositif de détection sans-fil conforme à l'invention.

L'invention concerne un dispositif de détection sans-fil employé pour détecter l'intensité d'un signal émis par une source et modulé par modulation de largeur d'impulsions. Ledit signal est employé pour réveiller le dispositif de détection.

Il peut s'agir par exemple d'un dispositif de détection de luminosité ou d'un dispositif de détection de température. Préférentiellement, le signal reçu est identique à celui qui est employé par le dispositif de détection pour générer des valeurs de mesures. C'est par exemple le cas dans un dispositif de détection de luminosité qui sera réveillé par une modification de la fréquence du signal lumineux émis par la source de lumière. En revanche, un capteur de température sera par exemple réveillé par une modification de la fréquence des vibrations du support sur lequel le capteur est fixé.

Bien entendu, le principe de l'invention décrit ci-dessous peut s'appliquer à tout type de dispositif de détection apte à recevoir un signal dont la fréquence peut être modulée par modulation de largeur d'impulsions.

Dans la suite de la description et sur les dessins, le dispositif de détection de l'invention est par exemple employé pour détecter l'intensité lumineuse dans un système à éclairage variable à diodes électroluminescentes ou à lampes fluorescentes. Les références indiquées sur les dessins s'appliquent de la même manière au dispositif de détection considéré de manière générale.

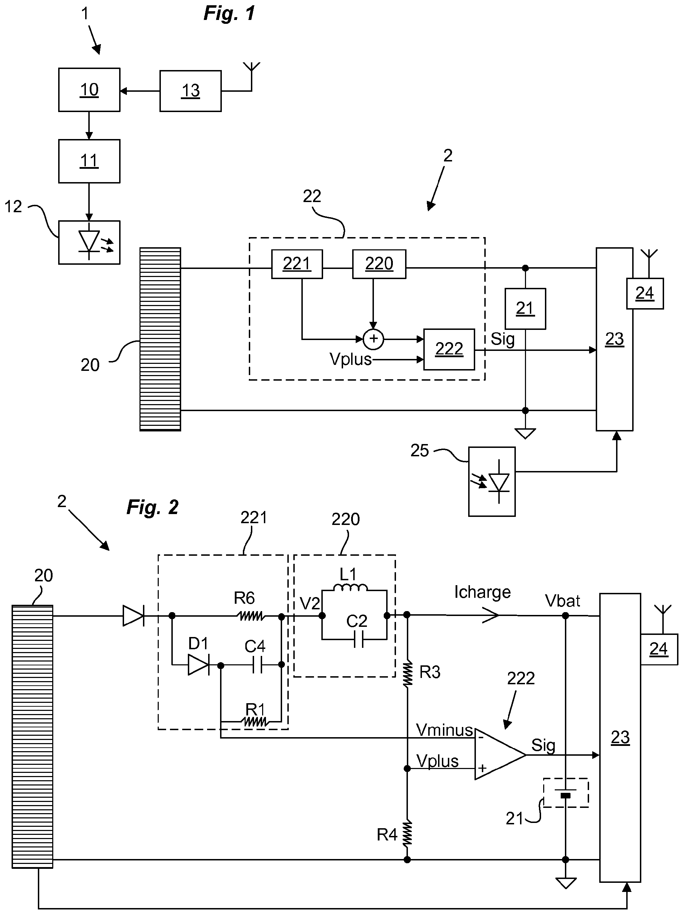

En référence à la figure 1, un système d'éclairage électronique variable comporte un dispositif de commande 1 comprenant un contrôleur d'éclairage 10 qui est destiné à générer un ordre de commande à destination d'une source 11 d'alimentation électrique à partir d'une consigne d'intensité lumineuse et d'une valeur mesurée d'intensité lumineuse. La source 11 d'alimentation électrique est agencée pour alimenter une source de lumière 12, constituée par exemple d'une ou plusieurs diodes électroluminescentes, en tenant compte de l'ordre de commande reçu. L'alimentation de la source de lumière 12 est réalisée par modulation de largeur d'impulsions, par exemple à une première fréquence $f_0$ de modulation ou à une deuxième fréquence $f_1$ de modulation. La source de lumière 12 émet donc un signal lumineux pulsé à la même fréquence de modulation.

L'intensité lumineuse est mesurée par un dispositif 2 de détection de luminosité sans-fil apte à mesurer à intervalles réguliers l'intensité lumineuse et à envoyer les valeurs mesurées par liaison sans-fil vers le dispositif de commande.

Le dispositif 2 de détection de luminosité comporte un générateur 20 d'énergie autonome tel qu'un module photovoltaïque, piézoélectrique ou électromagnétique destiné à générer un courant de charge Icharge. Comme représenté sur les figures, le générateur 20 d'énergie autonome est un module photovoltaïque destiné à générer le courant de charge Icharge en fonction de l'intensité du signal lumineux reçu. Le dispositif comporte également des moyens 21 de stockage de l'énergie électrique récupérée grâce au générateur 20 d'énergie autonome, constitués par exemple d'un ou plusieurs condensateurs ou d'une batterie.

Le dispositif de détection de luminosité comporte également un capteur de luminosité 25 comportant un élément sensible à la luminosité pour capter l'intensité lumineuse et la transformer en un courant électrique représentatif de ladite intensité lumineuse et des moyens de traitement 23 destinés à générer les valeurs d'intensité lumineuse à envoyer.

Selon l'invention, le dispositif 2 de détection de luminosité comporte un circuit de réveil 22 lui permettant d'être réveillé de manière asynchrone par le dispositif de commande 1. Le circuit de réveil 22 comporte des moyens de détection 220 d'un signal lumineux modulé à la deuxième fréquence $f_1$, différente de la première fréquence $f_0$, et des moyens de déclenchement 222 permettant de réveiller le dispositif de manière asynchrone lorsque les moyens de détection 220 détectent que la fréquence de modulation du signal lumineux émis est à la deuxième fréquence $f_1$. Le circuit de réveil comporte également un circuit 221 d'élimination des faux réveils dont l'objectif sera explicité ci-dessous.

Le dispositif comporte enfin un émetteur radio 24 commandé par les moyens de traitement 23 et apte à envoyer par message radio lesdites valeurs d'intensité lumineuse mesurées vers un récepteur radio 13 du dispositif de commande.

Le principe de l'invention consiste à détecter le changement de la fréquence de modulation à partir du courant de charge Icharge généré par le générateur 20 d'énergie autonome. Le générateur 20 d'énergie autonome étant toujours exposé à la lumière pour pouvoir charger le dispositif, celui-ci peut facilement être employé pour commander le circuit de réveil 22 du dispositif.

Un exemple de réalisation du dispositif de détection de la luminosité est décrit plus précisément sur la figure 2.

Sur la figure 2, le générateur 20 d'énergie autonome est formé d'un module photovoltaïque. Sur la figure 2, le module photovoltaïque est par exemple employé pour réaliser également la fonction du capteur de luminosité 25 défini ci-dessus et il permet de générer le courant de charge Icharge en fonction de l'intensité du signal lumineux reçu. Les moyens 21 de stockage de l'énergie électrique sont par exemple composés d'une batterie connectée au module photovoltaïque.

Les moyens de détection 220 du circuit de réveil 22 comportent un circuit résonant destiné à détecter la modulation à la deuxième fréquence du signal lumineux. Le circuit résonant est par exemple de type LC (inductance L1 et condensateur C2), accordé pour résonner à la deuxième fréquence $f_1$, et connecté en série sur le circuit de charge de la batterie 210. Le circuit 221 d'élimination des faux réveils comporte un circuit redresseur connecté en série avec le circuit résonant et destiné à redresser le courant de charge Icharge pour détecter son amplitude. Plus précisément, le circuit redresseur comporte une résistance R6 connectée en série sur le circuit de charge et un ensemble connecté en parallèle de la résistance R6 et composé d'une diode D1, d'un condensateur C4 et d'une résistance R1. La résistance R1 et le condensateur C4 sont connectés en parallèle et l'ensemble qu'ils forment est connecté en série avec la diode D1.

Les moyens de déclenchement 222 comportent un comparateur à deux entrées, dont la première entrée est connectée au circuit redresseur (au point commun de connexion de la résistance R1, du condensateur C4 et de la diode D1) de manière à recevoir une tension Vminus résultant de la tension V2 aux bornes du circuit résonant et de la tension représentative de l'amplitude du courant de charge Icharge, et dont la deuxième entrée est connectée, via un pont de résistances R3, R4, aux bornes de la batterie 210 pour recevoir une tension représentative de la tension Vbat aux bornes de la batterie. Le comparateur comporte également une sortie qui est activée lorsque la tension appliquée sur sa première entrée passe en valeur négative par rapport à la tension appliquée sur sa deuxième entrée. Le signal de sortie Sig ainsi généré est appliqué aux moyens de traitement 23 du dispositif pour réveiller le dispositif de détection de luminosité.

Grâce au circuit redresseur évoqué ci-dessus, le dispositif est ainsi équipé pour gérer les faux réveils. Les faux réveils du dispositif de détection de luminosité peuvent survenir lorsque le module de l'harmonique à la deuxième fréquence $f_1$ du courant de charge Icharge est modifié. Cela peut se produire dans les deux cas suivants :

1) Par modification de l'intensité lumineuse, sans changer le spectre fréquentiel. Cela peut se produire si le dispositif de détection est déplacé par rapport à la source de lumière,

2) Par modification du rapport cyclique de la modulation de largeur d'impulsions. Cela peut se produire si le dispositif de commande 1 envoie un ordre de modification de l'intensité du signal lumineux.

Pour immuniser le dispositif contre les faux réveils, le circuit redresseur corrige la tension Vminus appliquée sur la première entrée du comparateur. Grâce au circuit redresseur, une augmentation de l'amplitude de la tension aux bornes du circuit résonant est automatiquement accompagnée par une hausse proportionnelle d'une composante continue et positive représentée par la tension aux bornes du circuit redresseur. Même dans l'un des deux cas évoqués ci-dessus, la tension Vminus ne passera pas en valeur négative par rapport à la tension de référence Vplus et donc la sortie du comparateur ne sera pas activée. Pour cela, le circuit redresseur comporte une résistance R6 dont la valeur est ajustée en fonction de la deuxième fréquence.

La tension Vminus appliquée sur la première entrée du comparateur vaut donc :

$$Vminus = V2 + Icharge\_crête * R6$$

Le principe de fonctionnement du dispositif de détection de luminosité l'invention est ainsi le suivant :

Initialement, le signal lumineux est modulé par la modulation de largeur d'impulsions à la première fréquence $f_0$. Le module photovoltaïque charge la batterie 210 avec un courant de charge Icharge proportionnel à l'intensité du signal lumineux instantané. Le courant de charge Icharge varie entre une valeur crête et une valeur égale à zéro. La tension Vminus reste plus positive que la tension Vplus et le dispositif reste en veille.

Lorsque le signal lumineux est modulé par la modulation de largeur d'impulsions à la deuxième fréquence $f_1$, le courant de charge Icharge généré par le module photovoltaïque va osciller à une fréquence fondamentale égale à la deuxième fréquence $f_1$. Le circuit résonant accordé à la deuxième fréquence $f_1$ va alors commencer à résonner. En oscillant, la tension aux bornes du circuit résonant va périodiquement passer en valeur négative par rapport à la tension Vbat aux bornes de la batterie. Si un pic suffisamment négatif survient, la sortie du comparateur est activée, le signal Sig étant généré pour occasionner le réveil du dispositif et de sa fonction de mesure.

En revanche, si l'intensité du signal lumineux change (par action sur le dispositif de commande ou déplacement du dispositif par rapport à la source de lumière) tout en restant à la première fréquence $f_0$, le seuil de déclenchement de la sortie du comparateur est modifiée par le niveau du courant de charge Icharge qui traverse le circuit redresseur. Même si le courant de charge Icharge comporte une harmonique modulée à la deuxième fréquence $f_1$, celle-ci n'entraînera pas un réveil du dispositif car cette harmonique restera négligeable. La sortie du comparateur ne sera donc activée que lors d'une apparition significative de l'harmonique modulée à la deuxième fréquence $f_1$ par rapport à sa valeur crête.

Le dispositif de détection de luminosité sans-fil de l'invention présente donc une consommation électrique particulièrement basse qui se limite à la consommation du comparateur et à celle des résistances R3 et R4. La fonction de réveil asynchrone implantée dans le dispositif de l'invention n'a donc qu'une faible influence sur l'autonomie énergétique du dispositif.

Si plusieurs dispositifs de détection de luminosité sont connectés à travers un réseau de communication, la technique de réveil décrite ci-dessus permet de synchroniser tous les dispositifs entre eux. Ainsi, chaque dispositif peut connaître à quel moment il peut transmettre des informations sur le réseau et il n'est donc pas forcé de rester en permanence à l'écoute. Le réveil synchronisé par la technique décrite peut augmenter la réactivité et raccourcir le délai de réponse des réseaux sans-fil fonctionnant en mode "balise" tels que "Wireless-HART ou "beacon enabled IEEE 802.15.4". Dans ce type de réseau sans-fil, tous les dispositifs (y compris le coordinateur) fonctionnent de façon indépendante. En revanche, pour communiquer sur le réseau, les dispositifs doivent savoir à quel moment se réveiller pour transmettre. Pour cela il est nécessaire qu'ils se synchronisent par rapport au réveil du coordinateur (ou d'un routeur). Lors de la réception d'une balise, tous les dispositifs sont informés de la durée de la période d'activité du coordinateur et à quel moment ils peuvent transmettre des données. Ils recevront aussi une indication du moment où le coordinateur entre en hibernation et pour quelle durée.

## Revendications

1. Dispositif (2) de détection destiné à détecter l'intensité d'un signal lumineux émis par une source lumineuse (12), ladite source lumineuse (12) générant un signal lumineux modulé à une première fréquence ($f_0$) ou à une deuxième fréquence ($f_1$), ledit dispositif comportant :

  - un générateur (20) d'énergie autonome comprenant un module photovoltaïque fournissant un courant de charge (Icharge),
  - des moyens (21) de stockage de l'énergie électrique alimentés par le courant de charge (Icharge) fourni par le générateur (20) d'énergie autonome,
  - des moyens de traitement (23),
  - un circuit de réveil (22) des moyens de traitement (23) du dispositif (2) de détection, le circuit de réveil comportant :

    - un circuit (221) d'élimination des faux réveils, connecté à la sortie du générateur (20), lesdits faux réveils étant dus à une seule variation de l'intensité du signal ou à une modification du rapport cyclique du signal lumineux, le circuit (221) d'élimination comportant un circuit redresseur destiné à détecter une amplitude maximum du courant de charge (Icharge),
    - des moyens de détection (220) du signal modulé à une deuxième fréquence (f1) différente de la première fréquence, connectés à la sortie du circuit (221) d'élimination des faux réveils, lesdits moyens de détection comportant un circuit résonant,
    - des moyens de déclenchement (222) d'un réveil du dispositif (2) de détection lorsque le signal est modulé à ladite deuxième fréquence ($f_1$), comportant un comparateur à deux entrées, la première entrée du comparateur étant connectée au circuit redresseur pour recevoir une tension égale à la somme de la tension mesurée aux bornes du circuit résonant et de la tension mesurée aux bornes du circuit redresseur et la deuxième entrée du comparateur étant connectée à une tension de référence représentative de la tension aux bornes des moyens de stockage de l'énergie (21) électrique,

  **caractérisé en ce que** le générateur (20) est le récepteur de la première fréquence et de la deuxième fréquence.

2. Dispositif selon la revendication 1, **caractérisé en ce qu'**il comporte un capteur de luminosité.

3. Système de communication comportant :

  - un coordinateur doté d'une source d'un signal lumineux modulé à une première fréquence (f0) ou à une deuxième fréquence (f1), par modulation de largeur d'impulsions,
  - des dispositifs de détection connectés au coordinateur à travers un réseau de communication,

  **caractérisé en ce que** :

  - chaque dispositif de détection est conforme à celui défini dans l'une des revendications précédentes et **en ce que** la source comporte des moyens d'émission du signal modulé à une deuxième fréquence (f1) en vue de réveiller les dispositifs et de les synchroniser.

**Patentansprüche**

1. Erkennungsvorrichtung (2) zur Erkennung der Intensität eines Lichtsignals, das von einer Lichtquelle (12) emittiert wird, wobei die Lichtquelle (12) ein Lichtsignal erzeugt, das auf einer ersten Frequenz ($f_0$) oder auf einer zweiten Frequenz ($f_1$) moduliert ist, wobei die Vorrichtung umfasst:

   - einen autonomen Stromgenerator (20), umfassend ein Fotovoltaikmodul, das einen Ladestrom liefert (Icharge),
   - Mittel (21) zur Speicherung elektrischer Energie, die vom Ladestrom (Icharge), der vom autonomen Stromgenerator (20) geliefert wird, gespeist werden,
   - Verarbeitungsmittel (23),
   - einen Weckkreis (22) der Verarbeitungsmittel (23) der Erkennungsvorrichtung (2), wobei der Weckkreis umfasst:

      - einen Eliminierungskreis (221) für Fehlweckrufe, angeschlossen an den Ausgang des Generators (20), wobei die Fehlweckrufe auf einer Einzelschwankung der Intensität des Signals oder auf einer Änderung des zyklischen Verhältnisses des Lichtsignals beruhen, wobei der Eliminierungskreis (221) einen Gleichrichterkreis umfasst, der zur Erkennung einer Maximalamplitude des Ladestroms (Icharge) bestimmt ist,
      - Erkennungsmittel (220) für das Signal, das auf einer von der ersten Frequenz verschiedenen zweiten Frequenz ($f_1$) moduliert ist, die an den Ausgang des Eliminierungskreises (221) für Fehlweckrufe angeschlossen sind, wobei die Erkennungsmittel einen Resonanzkreis umfassen,
      - Auslösungsmittel (222) zum Wecken der Erkennungsvorrichtung (2), wenn das Signal auf der zweiten Frequenz ($f_1$) moduliert wird, umfassend einen Komparator mit zwei Eingängen, wobei der erste Eingang des Komparators an den Gleichrichterkreis angeschlossen ist, um eine Spannung zu empfangen, die gleich der Summe der an den Klemmen des Resonanzkreises gemessenen Spannung und der an den Klemmen des Gleichrichterkreises gemessenen Spannung ist, und der zweite Eingang des Komparators an eine Referenzspannung angeschlossen ist, die für die Spannung an den Klemmen der Mittel (21) zur Speicherung elektrischer Energie repräsentativ ist,

   **dadurch gekennzeichnet, dass** der Generator (20) der Empfänger der ersten Frequenz und der zweiten Frequenz ist.

2. Vorrichtung nach Anspruch 1, **dadurch gekennzeichnet, dass** sie einen Lichtsensor umfasst.

3. Kommunikationssystem, umfassend:

   - einen Koordinator mit einer Quelle für ein Lichtsignal, das durch Modulation der Impulsbreite auf einer ersten Frequenz ($f_0$) oder auf einer zweiten Frequenz ($f_1$) moduliert ist,
   - Erkennungsvorrichtungen, die über ein Kommunikationsnetz mit dem Koordinator verbunden sind,

   **dadurch gekennzeichnet, dass**:

   - jede Erkennungsvorrichtung einer nach einem der vorherigen Ansprüche entspricht, und dadurch, dass die Quelle Mittel zur Emittierung des auf einer zweiten Frequenz (f1) modulierten Signals zum Wecken und Synchronisieren der Vorrichtungen umfasst.

**Claims**

1. Detection device (2) for detecting the intensity of a light signal emitted by a light source (12), said light source (12) generating a light signal modulated at a first frequency ($f_0$) or at a second frequency ($f_1$), said device comprising:

   - a standalone energy generator (20) comprising a photovoltaic module supplying a charging current (Icharge),
   - electrical energy storage means (21) powered by the charging current (Icharge) supplied by the standalone energy generator (20),
   - processing means (23),
   - a reactivation circuit (22) for the processing means (23) of the detection device (2), the reactivation circuit comprising:

      - a circuit (221) for eliminating false reactivations, connected at the output of the generator (20), said false reactivations being due to a single variation of the intensity of the signal or to a modification of a duty cycle of the light signal, the circuit (221) comprising a rectifier circuit designed to detect a maximum amplitude of the charging current (Icharge),

- detecting means (220) for detecting the signal modulated at a second frequency ($f_1$), different from the first frequency, connected to the output of the circuit (221) for eliminating false reactivations, said detection means comprising a resonant circuit,
- tripping means (222) for tripping a reactivation of the detection device (2) when the signal is modulated at said second frequency ($f_1$), comprising a comparator with two inputs, the first input of the comparator being connected to the rectifier circuit to receive a voltage equal to the sum of the voltage measured at the terminals of the resonant circuit and of the voltage measured at the terminals of the rectifier circuit and the second input of the comparator being connected to a reference voltage representative of the voltage at the terminals of the electrical energy storage means (21),

**characterized in that** the generator (20) is the receiver of the first frequency and of the second frequency.

2.  Device according to Claim 1, **characterized in that** it comprises a brightness sensor.

3.  Communication system comprising:

    - a coordinator provided with a source of a light signal modulated at a first frequency ($f_0$) or at a second frequency ($f_1$), by pulse-width modulation,
    - detection devices connected to the coordinator via a communication network,

    **characterized in that**:

    - each detection device conforms to that defined in one of the preceding claims, and **in that** the source comprises means for emitting the signal modulated at a second frequency ($f_1$) in order to reactivate the devices and synchronise them.

Fig. 1

Fig. 2

**EP 2 584 873 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004206609 A

- US 2008272826 A